(19) Europäisches Patentamt
European Patent Office
Office européen des brevets

(11) Veröffentlichungsnummer: **0 240 839**
**B1**

# (12) EUROPÄISCHE PATENTSCHRIFT

(45) Veröffentlichungstag der Patentschrift: **24.05.89**

(51) Int. Cl.⁴: **C 09 B 62/012**, C 09 B 45/14, D 06 P 1/10, D 06 P 1/38

(21) Anmeldenummer: **87104380.8**

(22) Anmeldetag: **25.03.87**

## (54) Metallkomplex-Farbstoffe.

(30) Priorität: **10.04.86 DE 3612016**

(43) Veröffentlichungstag der Anmeldung: **14.10.87 Patentblatt 87/42**

(45) Bekanntmachung des Hinweises auf die Patenterteilung: **24.05.89 Patentblatt 89/21**

(84) Benannte Vertragsstaaten: **CH DE FR GB LI**

(56) Entgegenhaltungen:
**EP-A- 0 142 104**
**FR-A- 1 504 940**
**US-A- 4 077 953**

(73) Patentinhaber: **BAYER AG, Konzernverwaltung RP Patentabteilung, D-5090 Leverkusen 1 Bayerwerk (DE)**

(72) Erfinder: **Henk, Hermann, Dr., Roggendorfstrasse 55, D-5000 Köln 80 (DE)**

EP 0 240 839 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind Farbstoffe, die in Form der freien Säure der Formel

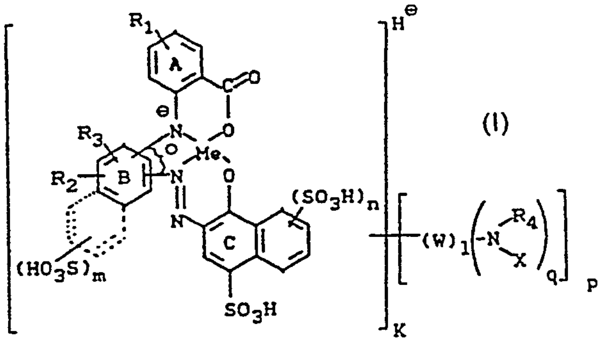

(I)

entsprechen, worin

W = direkte Bindung oder ein Brückenglied zu einem C-Atom des Naphthalinkerns C oder des Benzolkerns A

$R_1$, $R_2$, $R_3$ = H−, $C_1$-$C_4$-Alkyl, $C_1$-$C_4$-Alkoxy, Hydroxy, Halogen, Carboxy-, Sulfonamido, Nitro, Alkyl- oder Arylcarbonylamino, $-SO_3H$, $-SO_2-CH=CH_2$, $-SO_2-CH_2-CH_2-Z$ worin

Z = $-OSO_3H$, $-SSO_3H$, $-OPO_3H_3$, $-OCOCH_3$, Dialkylamino, quartäre Ammoniumgruppe

$R_4$ = H oder gegebenenfalls durch $C_1$-$C_4$-Alkoxy, $-OSO_3H$, $-SO_3H$, $-COOH$, Hydroxy substituiertes $C_1$-$C_4$-Alkyl

X = faserreaktiver Rest

p = 0, 1 oder 2

q = 0 oder 1

l, m, n = 0 oder 1

K = 1 oder 2

Me = zweiwertiges Metallatom, wie Fe, Cu, Zn, Co, Ni vorzugsweise Cu

sowie Verfahren zur deren Herstellung und deren Verwendung zum Färben und Bedrucken von natürlichen und synthetischen textilen und nichttextilen Materialien.

Geeignete Alkylcarbonylaminogruppen sind beispielsweise $C_1$-$C_4$-Alkylcarbonylaminogruppen, geeignete Arylcarbonylaminogruppen sind insbesondere gegebenenfalls substituierte Phenylcarbonylaminogruppen, geeignete Sulfonamigruppen sind insbesondere Sulfonamid, Sulfonsäure -mono- und Sulfonsäure-di-$C_1$-$C_4$-alkylamid.

Geeignete Brückenglieder W sind beispielsweise $-CO-$, $-SO_2-$, $-NH-CO-NH-$,

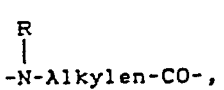 ,

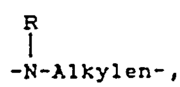

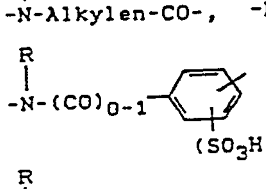 ,

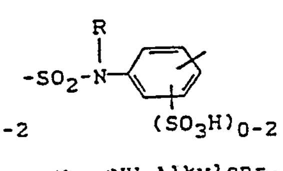

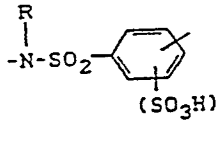 ,

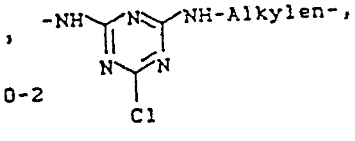

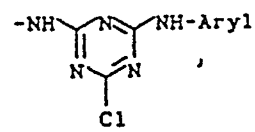 , $-Arylen-(O)_{0-1}-Alkylen$,

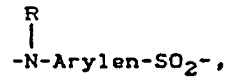 ,

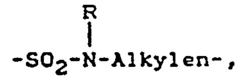

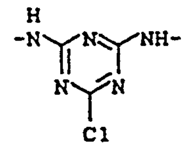 ,

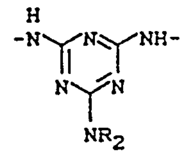

wobei

R bevorzugt = H oder $C_1$-$C_4$-Alkyl

Alkylen bevorzugt $C_2$-$C_6$-Alkylen und

Arylen bevorzugt gegebenenfalls substituiertes Phenyl bedeutet.

Geeignete faserreaktive Reste, d. h. solche die mit den OH- oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatisch-heterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin- und Phenanthridin-Ring-System.

Unter den reaktiven Substituenten am Heterocyclus sind beispielsweise zu erwähnen Halogen (Cl, Br oder F), Ammonium einschliesslich Hydrazinium, Sulfonium, Sulfonyl, Azido-($N_3$), Rhodanido, Thio, Thiolether, Oxiether, Sulfinsäure und Sulfonsäure.

Im einzelnen sind beispielsweise zu nennen:

2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls substituiertes Phenyl-$C_1$-$C_4$-alkyl und Aryl vorzugsweise gegebenenfalls substituiertes Phenyl oder Naphthyl bedeutet und wobei bevorzugte Substituenten für Alkyl, Hydroxy, Cyan, $C_1$-$C_4$-Alkoxy, Carboxy, Sulfo oder Sulfato sind und für Phenyl und Naphthyl, Sulfo, $C_1$-$C_4$-Alkyl, $C_1$-$C_4$-Alkoxy, Carboxy, Halogen oder Acylamino.

Im einzelnen seien folgende Reste genannt:

2-Amino-4-fluor-triazinyl-6, 2-Methylamino-4-fluor-triazinyl-6, 2-Ethylamino-4-fluor-triazinyl-6, 2-Isopropylamino-4-fluor-triazinyl-6, 2-Dimethylamino-4-fluor-triazinyl-6, 2-Diethylamino-4-fluor-triazinyl-6, 2-β-Methoxy-ethylamino-4-fluor-triazinyl-6, 2-β-Hydroxyethylami-

no)-4-fluor-triazinyl-6, 2-Di-(β-hydroxyethyl-amino)-4-fluor-triazinyl-6, 2-β-Sulfoethylamino-4-fluor-triazinyl-6, 2-β-Sulfoethyl-methyl-amino-4-fluor-triazinyl-6, 2-Carboxymethylamino-4-fluor-triazinyl-6, 2-Di-(carboxymethylamino)-4-fluor-triazinyl-6, 2-Sulfomethyl-methyl-amino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(x-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)amino-4-fluor-triazinyl-6, 2-(2'-Chlor-5'-sulfophenly)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4'-sulfophenyl)-amino-4-fluor-triazinyl-6, 2-(2'-Carboxy-5'-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-β-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl)-(2'))-4-fluor-triazinyl-6, 2-(3',6',8'-Trisulfonaphthyl-(2'))-4-fluor-triazinyl-6, 2-(3',6'-Disulfonaphthyl-(1'))-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl-bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-Phenoxy-4-fluor-triazinyl-6, 2-(o-, m-, oder p-Sulfophenoxy)-4-fluor-triazinyl-6, 2-(o-, m-, oder p-Methyl- oder -Methoxy-phenoxy)-4-fluor-triazinyl-6, 2-β-Hydroxyethylmercapto-4-fluor-triazinyl-6, 2-Phenylmercapto-4-fluor-triazinyl-6, 2-(4'-Methylphenyl)-mercapto-4-fluor-triazinyl-6, 2-(2',4'-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-Triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin, oder -Picolin, Nicotinsäure oder Isonicotinsäure, Sulfinaten insbesondere Benzolsulfinsäure oder Hydrogensulfit erhältlichen Reste.

Mono-, Di- oder Trihalogenpyrimidinylreste, wie 2,4-Dichlorpyrimidinyl-6-, 2,3,5-Trichlorpyrimidinyl-6-, 2,4-Dichlor-5-nitro- oder -5-methyl- oder -5-carboxymethyl- oder -5-carboxy-oder -5-cyano- oder -5-vinyl- oder -5-sulfo- oder -5-mono-, -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, -2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-chinoxalin-3-carbonyl-, 2-oder 3-Monochlorchinoxalin-6-carbonyl-, 2-oder 3-Monochlorchinoxalin-6-sulfonyl-, 2,3-Dichlorchinoxalin-6-carbonyl-, 2,3,-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4',5')Dichlorpyridazon-6'-yl-1')-phenylsulfonyl- oder -carbonyl-, β-(4',5'-Dichlorpyridazon-6'-yl-1')-ethylcarbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluordichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2-Fluor-4-dichlormethyl-5-chlorpyrimidin-6-yl, 2-Fluor-5-chlorpyrimidin-4-yl; 2-Methyl-4-fluor-5-methylsulfonyl-pyrimidinyl-6; 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethylpyrimidinyl-4-, 2-Phenylsulfonyl-5-chlor-6-methyl-pyrimidinyl-4-2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methyl-sulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoethylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4-oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl-; 2-Chlorbenzthiazol-5- oder -6-carbonyl- oder -5- oder -6-sulfonyl-, 2-Arylsulfonyl- oder Alkylsulfonylbenzthiazol-5- oder -6-carbonyl- oder -5- oder -6-sulfonyl-, wie 2-Methylsulfonyl- oder 2-Ethylsulfonylbenzthiazol-5- oder -6-sulfonyl- oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl.

Des weiteren sind Reaktivgruppen der aliphatischen Reihe zu nennen, wie Acryloyl-, Mono-, Di- oder Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, β-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3,-Tetrafluorcyclobutan-carbonyl-1- oder -sulfonyl-1-, β-(2,2,3,3-Tetrafluorcyclobutyl-2)aryloxy-, α- oder β-Bromacryloyl-, α- oder β-Alkyl- oder Arylsulfoacryloyl-Gruppe, wie α- oder β-Methylsulfnylacryloyl, Chloracetyl, Vinylsulfonyl, $-SO_2CH_2CH_2Z$ worin Z = alkalisch abspaltbare Gruppe, insbesondere $-OSO_3H$, $-OCOCH_3$, $-SSO_3H$, $-OPO_3H_2$, $-OCOC_6H_5$, Di-$C_1$-$C_4$-Alkylamino, quartäres Ammonium, insbesondere $-N^{\oplus}(C_1\text{-}C_4\text{-Alkyl})_3X^{\ominus}$,

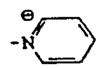 $X^{\ominus}$ oder 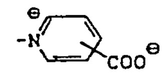 mit

X = Anion, bspw. $-OSO_3H$, $-OPO_3H_2$, $-Cl$, $-Br$, $-F$, $-SCN-OCN$, $-OSO_3CH_3$, $-OSO_2C_6H_5$, $OCO-CH_3$.

Bevorzugte Farbstoffe (I) sind solche der Formeln

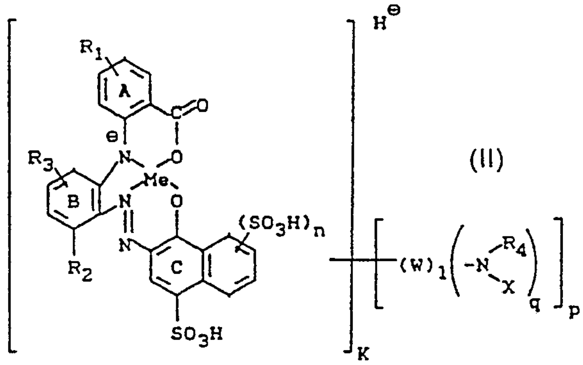

(II)

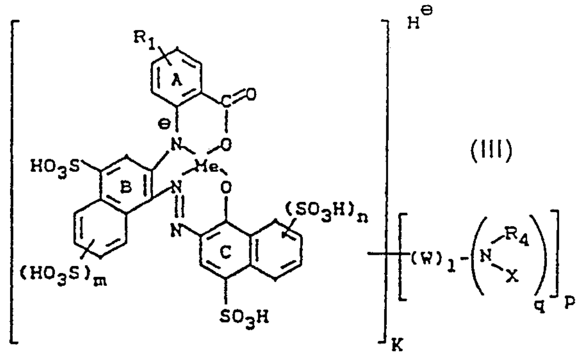

(III)

sowie solche der Formeln I-III mit

K = 1

q, l, m, n, p = 0 (diese Farbstoffe eignen sich insbesondere als Woll-, Polyamid- und Lederfarbstoffe)

weiterhin solche mit

K = 2

p, l = 1

q, m = 0 (diese Farbstoffe eignen sich insbesondere als Direktfarbstoff)

und solche mit

q, K, p = 1

l, m = 0 (diese Farbstoffe eignen sich insbesondere als Reaktivfarbstoffe für Wolle, Polyamid insbesondere aber für Zellulosefasern wie Baumwolle).

Bevorzugte Reaktivfarbstoffe sind dabei solche der Formel

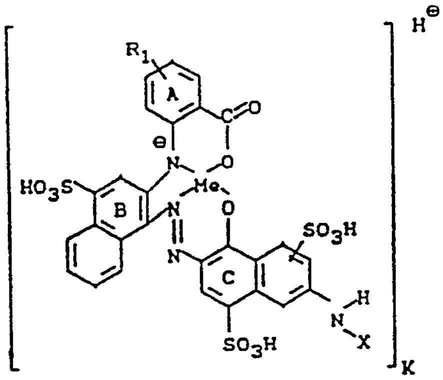

(IV)

Die Farbstoffe der Formel I erhält man beispielsweise durch Umsetzung einer ortho-Halogen-Azoverbindung der Formel

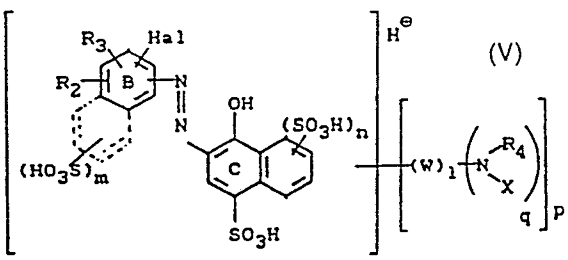

(V)

(die ihrerseits durch Kuppeln diazotierter Amine der Formel

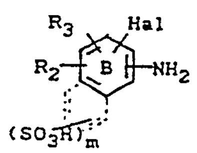

(Va)

mit Kupplungskomponenten der Formel

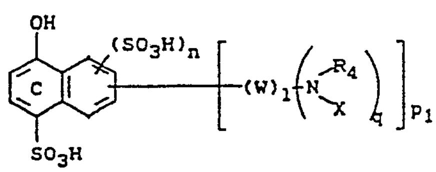

(Vb)

erhältlich sind)
mit einem ortho-Aminobenzoesäurederivat der Formel

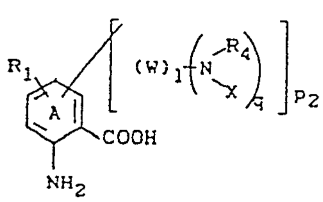

(VI)

worin $p_1$ und $p_2$ = 0 oder 1,
in Anwesenheit metallabgebender Mittel insbesondere der entsprechenden Metallsalze, vorzugsweise der Sulfate, Acetate oder Chloride, gegebenenfalls unter Zusatz katalytischer mengen eines Kupfer(I)salzes wie Kupfer-I-chlorid.

Die Reaktion wird vorzugsweise in neutralem bis schwach alkalischem wässerigen oder wässerig-organischem Medium bei Raumtemperatur bis leicht erhöhter Temperatur durchgeführt. Sie verläuft mit hohen Ausbeuten.

Geeignete Verbindungen Va sind beispielsweise:
2,4,6-Trichloranilin,
2,4-Dinitro-6-chloranilin,
2,4-Dinitro-6-bromanilin,
2,6-Dichlor-4-nitroanilin,
2,6-Dibrom-4-nitroanilin,
2-Brom-6-chlor-4-nitroanilin,
2,6-Dibrom-4-methylanilin,
2,6-Dibrom-4-(β-sulfatethylsulfonyl)-anilin,
4,6-Dichloranilin-2-sulfonsäure,
5-Chlor-6-aminotoluol-3-sulfonsäure,
1-Amino-2-bromnaphthalin-4-sulfonsäure,
1-Amino-2-bromnaphthalin-4,6-disulfonsäure,
1-Amino-2-bromnaphthalin-4,7-disulfonsäure,

Geeignete Verbindungen Vb sind beispielsweise:
1-Hydroxynaphthalin-4-sulfonsäure,
1-Hydroxynaphthalin-4,8-disulfonsäure,
1-Hydroxy-8-(X-amino)naphthalin-4,6-disulfonsäure,
1-Hydroxy-6-(X-amino)naphthalin-4,6-disulfonsäure,
1-Hydroxy-6-(X-amino)naphthalin-4-sulfonsäure,
1-Hydroxy-7-(X-amino)naphthalin-4-sulfonsäure,
6,6'-(Carbonyldiimido)bis[1-hydroxynaphthalin-4-sulfonsäure],
6,6'-(Carbonyldiimino)bis[1-hydroxynaphthalin-4,8-disulfonsäure].

X steht dabei für einen faserreaktiven Rest, insbesondere für einen der oben genannten Reste.

Geeignete Verbindungen der allgemeinen Formel VI sind z. B.:
2-Aminobenzoesäure
2-Amino-4-chlorbenzoesäure
2-Amino-5-chlorbenzoesäure
2-Amino-6-chlorbenzoesäure
2-Amino-4-nitrobenzoesäure
2-Amino-5-nitrobenzoesäure
2-Amino-4-(acetylamino)-benzoesäure
2-Amino-5-(acetylamino)-benzoesäure
5,5'-(Carbonyldiimino)bis[2-aminobenzoesäure]
Benzidin-3,3'-dicarbonsäure
2-Amino-5-sulfobenzoesäure
2-Amino-4-sulfobenzoesäure
2-Amino-4-(aminosulfonyl)-benzoesäure
2-Amino-4-(X-amino)-benzoesäure
2-Amino-5-(x-amino)-benzoesäure.

Die angegebenen Formeln sind die der freien Säuren. Die Farbstoffe werden im allgemeinen in Form ihrer Salze, insbesondere der Alkali- oder Ammoniumsalze eingesetzt.

Die mit den erfindungsgemässen Farbstoffen erhältlichen Färbungen und Drucke, insbesondere solche auf Baumwolle und Zellwolle zeichnen sich

durch gute Echtheiten aus, insbesondere sehr gute Nass- und Lichtechtheit.

In der FR-A-1504940 werden Monoazochromkomplexfarbstoffe auf Basis von Monoazofarbstoffen mit je einer zur Azobrücke o-ständigen OH-Gruppe und einer Gruppe

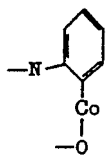

beschrieben, die als zweiten Liganden den Rest des Salicylsäure enthalten.

*Beispiel 1*

302 Teile 2-Brom-1-aminonaphthalin-4-sulfonsäure werden in ca. 2 Liter Wasser gelöst und nach üblichen Verfahren diazotiert. 467,5 Teile 1-Hydroxi-6-(2,4-difluor-5-chlorpyrimidinyl-6-)-aminophthalin-4,8-disulfonsäure werden in ca. 3,5 Liter Wasser verrührt. In diese Vorlage lässt man unter kräftigem Rühren die obige Diazolösung einfliessen und hält gleichzeitig mit ca. 800 Teilen einer 20%igen Sodalösung einen pH-Wert von 7-8. Die Kupplung ist rasch beendet. Das rote Kupplungsprodukt ist grösstenteils ausgefallen. Diese Suspension wird langsam mit 275 Teilen 2-Aminobenzoesäure versetzt und gleichzeitig mit ca. 1000 Teilen einer 20%igen Sodalösung der pH-Wert von 7-8 konstant gehalten.

Anschliessend werden 1380 Teile einer 18%igen Kupfersulfatlösung zugetropft, wobei wiederum durch Zugabe von 400 Teilen einer 20%igen Sodalösung der pH-Wert bei 7-8 gehalten wird. Nach mehrstündigem Rühren wird filtriert und der Farbstoff aus dem Filtrat durch Zugabe von NaCl ausgeschieden.

Der ausgefallene Farbstoff wird abfiltriert und getrocknet. Man erhält ca. 1000 Teile eines Farbstoffs, der in Form der freien Säure der folgenden Formel entspricht.

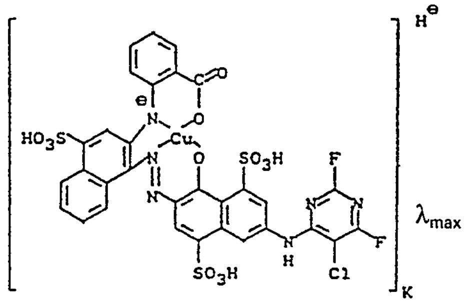

$\lambda_{max}$ = 642 nm

Der Farbstoff löst sich in Wasser mit dunkelgrüner Farbe und liefert auf Cellulose-Materialien grüne Färbungen und Drucke von sehr hohen Echtheiten.

In der folgenden Tabelle sind weitere Farbstoffe beschrieben, die man erhält, wenn man $B-NH_2$ diazotiert, auf C-OH kuppelt und mit einer O-Aminocarbonsäure $A-NH_2$ in Anwesenheit von Kupfer(II)-salzen analog Beispiel 1 umsetzt.

*Tabelle I*

| Bsp. Nr. | $B-NH_2$ | C-OH | $A-NH_2$ | $\lambda_{max}$[nm] | Substrat/ Nuance |
|---|---|---|---|---|---|
| 2 | 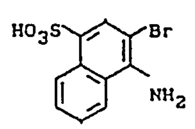 | 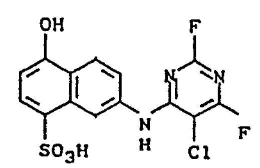 | 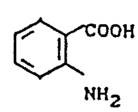 | 628 | BW/blaust. Grün |
| 3 | 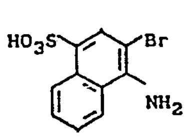 | 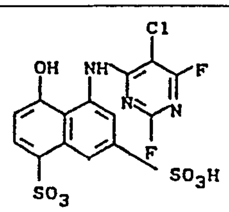 | 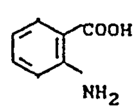 | 644 | BW/stumpfes Grün |
| 4 | 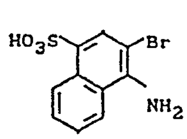 | 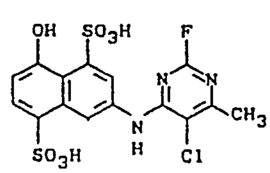 | 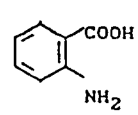 | 642 | BW/Grün |

*Tabelle I (Fortsetzung)*

| Bsp. Nr. | B−NH₂ | C−OH | A−NH₂ | $\lambda_{max}$[nm] | Substrat/ Nuance |
|---|---|---|---|---|---|
| 5 | 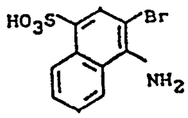 | 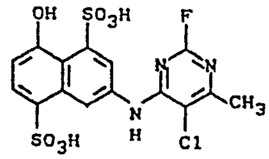 | 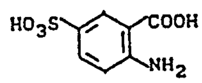 | 640 | BW/Grün |
| 6 | 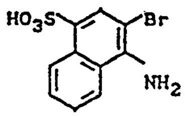 | 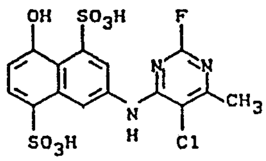 | 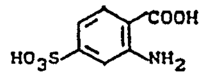 | 638 | BW/Grün |
| 7 | 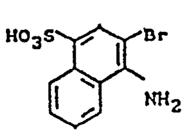 | 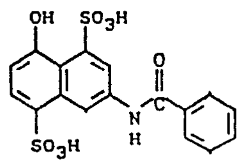 | 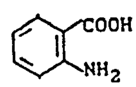 | 642 | Wolle<br>PA<br>Leder ↓ Grün |
| 8 | 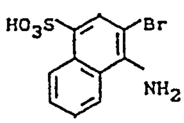 | 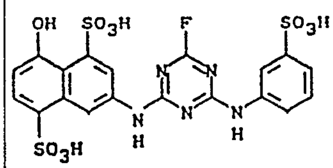 | 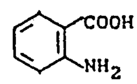 | 642 | BW/Grün |
| 9 | 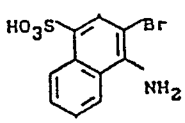 | 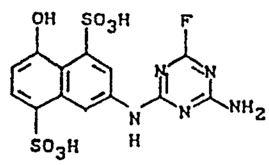 | 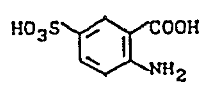 | 640 | BW/Grün |
| 10 | 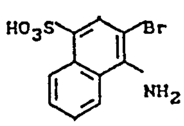 | 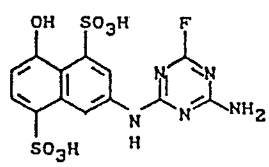 | 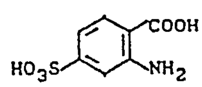 | 638 | BW/Grün |
| 11 | 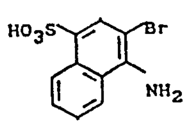 | 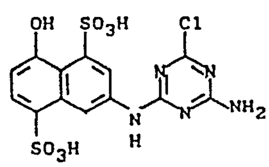 | 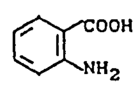 | 642 | BW/Grün |
| 12 | 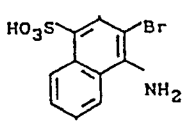 | 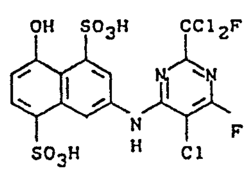 | 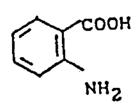 | 644 | BW/Grün |

*Tabelle I (Fortsetzung)*

| Bsp. Nr. | B−NH$_2$ | C−OH | A−NH$_2$ | $\lambda_{max}$[nm] | Substrat/ Nuance |
|---|---|---|---|---|---|
| 13 | 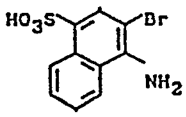 | 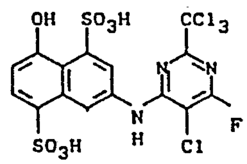 | 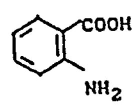 | 644 | BW/Grün |
| 14 | 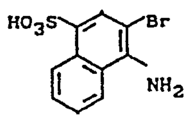 | 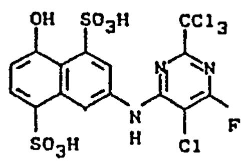 | 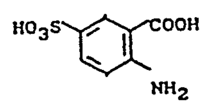 | 642 | BW/Grün |
| 15 | 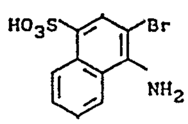 | 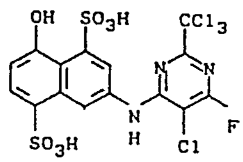 | 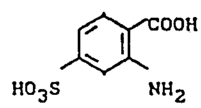 | 640 | BW/Grün |
| 16 | 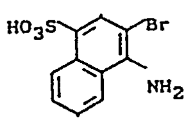 | 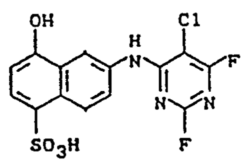 | 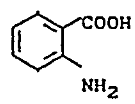 | | |
| 17 | 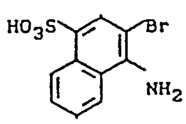 | 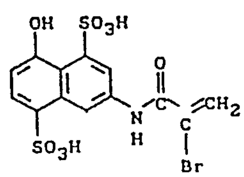 | 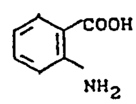 | 642 | Wolle/Grün |
| 18 | 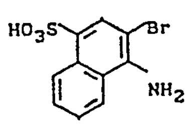 | 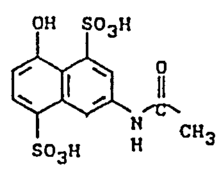 | 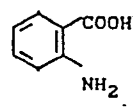 | 640 | Wolle/ Leder/Grün PA/ |
| 19 | 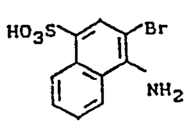 | 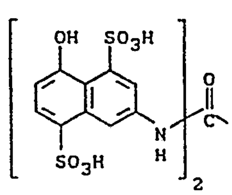 | 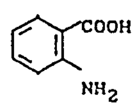 | 648 | BW/Grün |
| 20 | 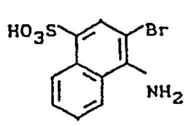 | 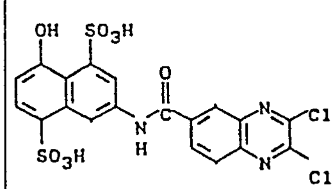 | 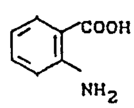 | 642 | BW/Grün |

*Tabelle I (Fortsetzung)*

| Bsp. Nr. | B−NH$_2$ | C−OH | A−NH$_2$ | $\lambda_{max}$[nm] | Substrat/ Nuance |
|---|---|---|---|---|---|
| 21 | 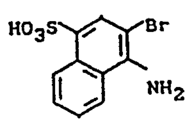 | 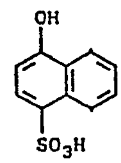 | 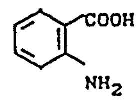 | 624 | Wolle/Blau- Leder/Grün PA/ |
| 22 | 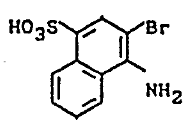 | 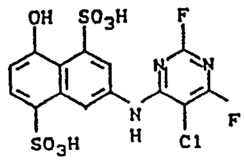 | 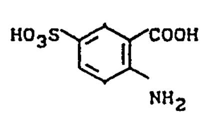 | 640 | BW/Grün |
| 23 | 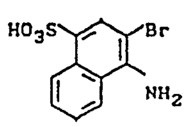 | 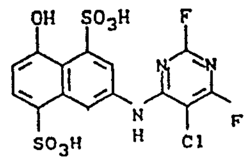 | 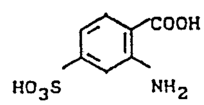 | 638 | BW/Grün |
| 24 | 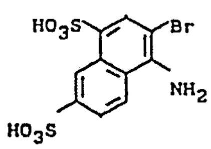 | 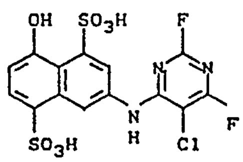 | 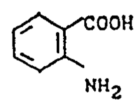 | 636 | BW/Grün |
| 25 | 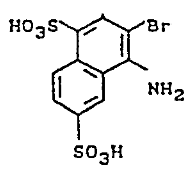 | 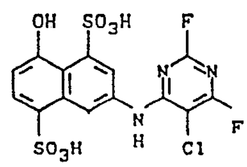 | 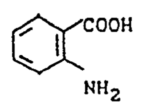 | 638 | BW/Grün |
| 26 | 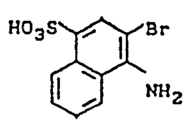 | 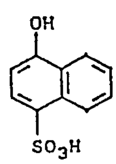 | 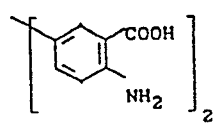 | 642 | BW/Grün |
| 27 | 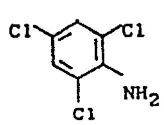 | 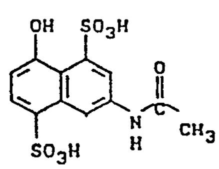 | 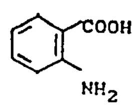 | 620 | Wolle/ PA/Grün- Leder/Blau |
| 28 | 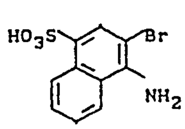 | 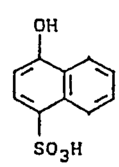 | 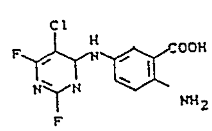 | | BW/Grün |

*Tabelle I (Fortsetzung)*

| Bsp. Nr. | $B-NH_2$ | C−OH | $A-NH_2$ | $\lambda_{max}$[nm] | Substrat/ Nuance |
|---|---|---|---|---|---|
| 29 | 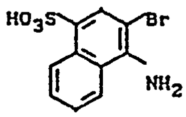 | 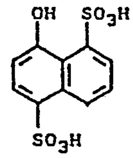 | 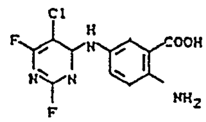 | | BW/Grün |
| 30 | 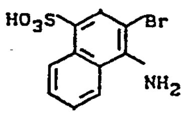 | 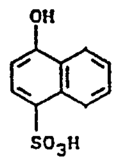 | 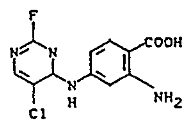 | | BW/Grün |
| 31 | 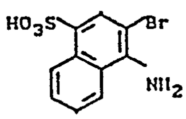 | 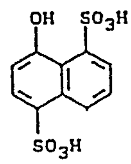 | 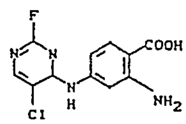 | | BW/Grün |
| 32 | 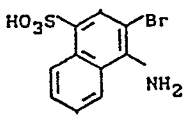 | 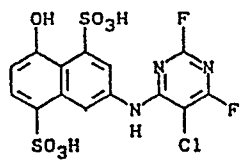 | 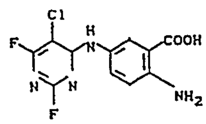 | | BW/Grün |
| 33 | 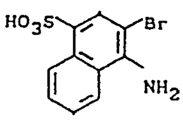 | 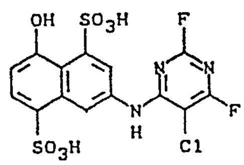 | 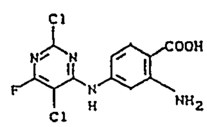 | | BW/Grün |
| 34 | 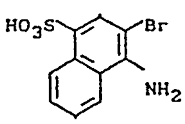 | 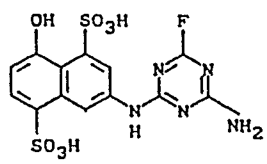 | 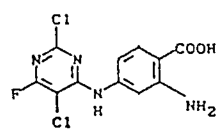 | | BW/Grün |
| 35 | 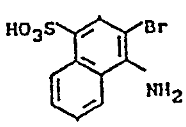 | 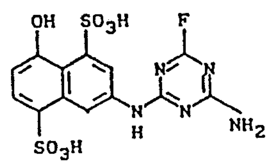 | 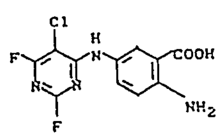 | | BW/Grün |

BW = Baumwolle
PA = Polyamid

## Patentansprüche

1. Farbstoffe die in Form der freien Säure der Formel

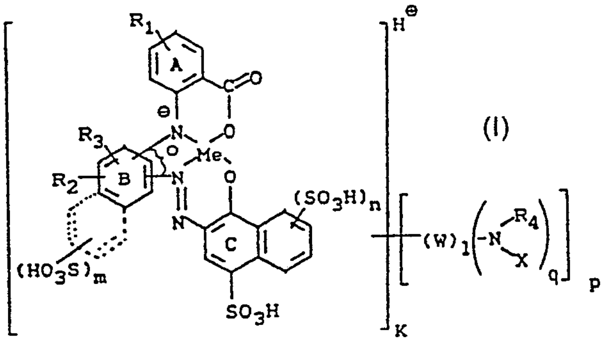

(I)

entsprechen, worin

W = direkte Bindung oder ein Brückenglied zu einem C-Atom des Naphthalinkerns C oder des Benzolkerns A

$R_1$, $R_2$, $R_3$ = H−, $C_1$-$C_4$-Alkyl, $C_1$-$C_4$-Alkoxy, Hydroxy, Halogen, Carboxy-, Sulfonamido, Nitro, Alkyl- oder Arylcarbonylamino, $-SO_3H$, $-SO_2-CH=CH_2$, $-SO_2-CH_2-CH_2-Z$ worin

Z = $-O-SO_3H$, $-S-SO_3H$, $-OPO_3H_2$, $-OCOCH_3$, Dialkylamino, quartäre Ammoniumgruppe

$R_4$ = H oder gegebenenfalls durch $C_1$-$C_4$-Alkoxy, $-OSO_3H$, $-SO_3H$, $-COOH$, Hydroxy substituiertes $C_1$-$C_4$-Alkyl

X = faserreaktiver Rest

p = 0, 1 oder 2

q = 0 oder 1

l, m, n = 0 oder 1

K = 1 oder 2

Me = zweiwertiges Metallatom, wie Fe, Cu, Zn, Co, Ni vorzugsweise Cu.

2. Farbstoffe des Anspruchs 1 der Formel

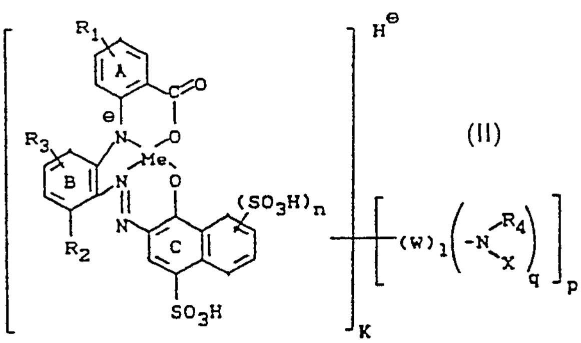

(II)

3. Farbstoffe des Anspruchs 1 der Formel

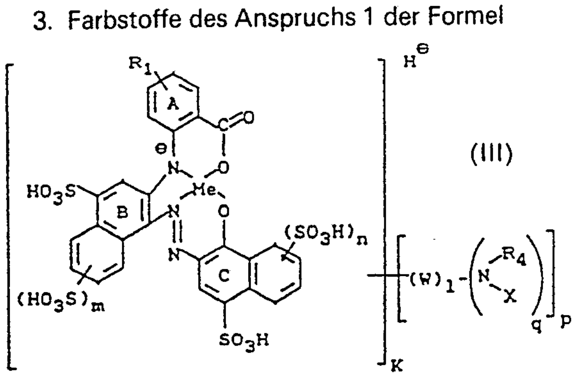

(III)

4. Farbstoffe der Ansprüche 1-3 mit K = 1, l, m, n, q, p = 0.

5. Farbstoffe der Ansprüche 1-3 mit K = 2, l, p = 1, q, m = 0.

6. Farbstoffe der Ansprüche 1-3 mit K, p, q = 1, l, m = 0.

7. Farbstoffe des Anspruchs 1 der Formel

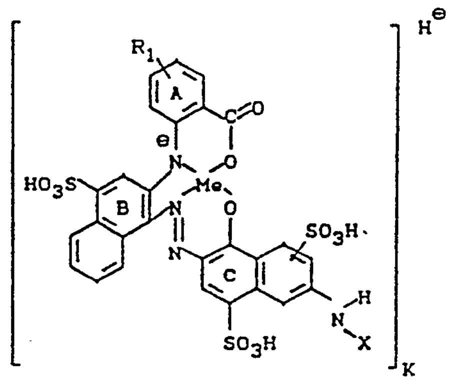

(IV)

8. Verwendung der Farbstoffe der Ansprüche 1-7 zum Färben und Bedrucken von natürlichen und synthetischen Materialien, insbesondere Fasermaterialien aus Baumwolle, Wolle, Polyamid sowie Leder.

## Claims

1. Dyestuffs which, in the form of the free acid, correspond to the formula

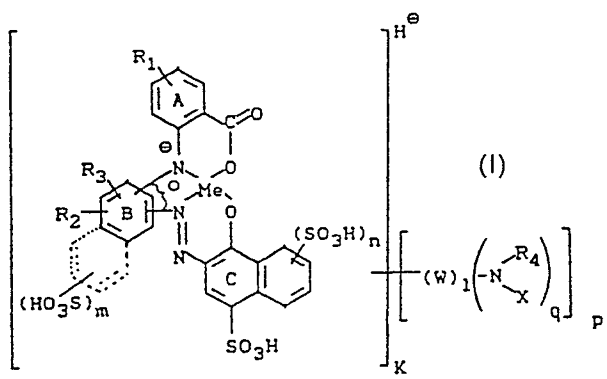

(I)

wherein

W = a direct bond or a bridge member to a C atom of the naphthalene nucleus C or the benzene nucleus A,

$R_1$, $R_2$ and $R_3$ = H−, $C_1$-$C_4$-alkyl, $C_1$-$C_4$-alkoxy, hydroxyl, halogen, carboxyl, sulphonamido, nitro, alkyl or arylcarbonylamino- $-SO_3H$, $-SO_2-CH=CH_2$ or $-SO_2-CH_2-CH_2-Z$, wherein

Z = $-O-SO_3H$, $-S-SO_3H$, $-OPO_3H_2$, $-OCOCH_3$, dialkylamino or a quaternary ammonium group,

$R_4$ = H or $C_1$-$C_4$-alkyl which is optionally substituted by $C_1$-$C_4$-alkoxy, $-OSO_3H$, $-SO_3H$, $-COOH$ or hydroxyl,

X = a fibre-reactive radical,

p = 0, 1 or 2,

q = 0 or 1,

l, m and n = 0 or 1,

K = 1 or 2, and

Me = a divalent metal atom, such as Fe, Cu, Zn, Co or Ni, preferably Cu.

2. Dyestuffs of Claim 1, of the formula

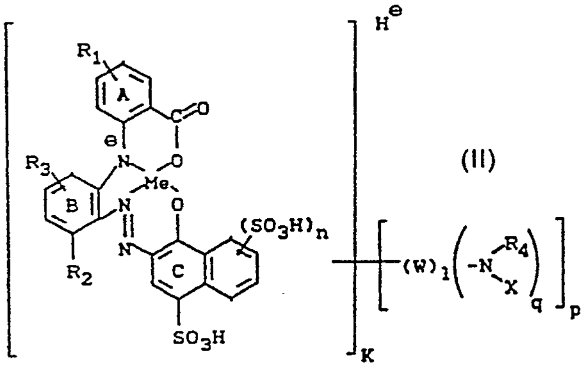

(II)

3. Dyestuffs of Claim 1, of the formula

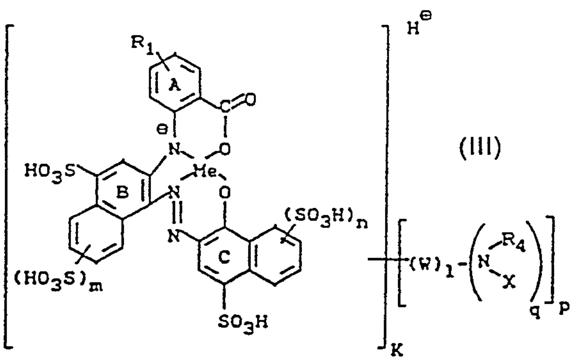

(III)

4. Dyestuffs of Claims 1-3, where K = 1 and l, m, n, q and p = 0.

5. Dyestuffs of Claims 1-3, where K = 2, l and p = 1 and q and m = 0.

6. Dyestuffs of Claims 1-3, where K, p and q = 1 and l and m = 0.

7. Dyestuffs of Claim 1, of the formula

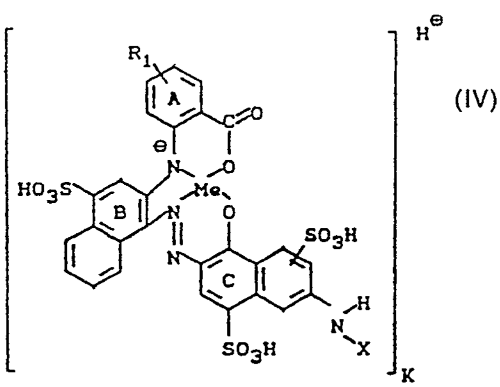

(IV)

8. Use of the dyestuffs of Claims 1-7 for dyeing and printing natural and synthetic materials, in particular fibre materials of cotton, wool and polyamide, and leather.

## Revendications

1. Colorants qui, sous la forme de l'acide libre, répondent à la formule:

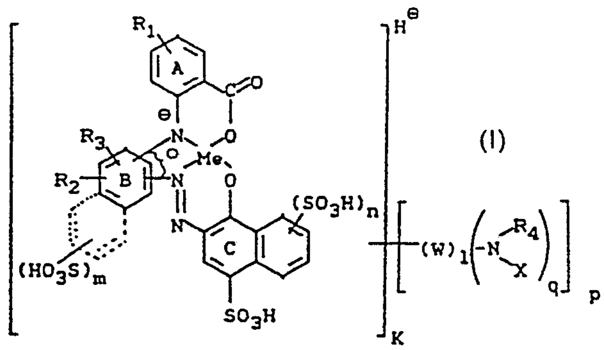

(I)

dans laquelle:

W représente une liaison directe ou un chaînon de pontage vers un atome de carbone du noyau naphtalénique C ou du noyau benzénique A,

$R_1$, $R_2$, $R_3$ représentent chacun H, un groupe alkyle en $C_1$ à $C_4$, alcoxy en $C_1$ à $C_4$, hydroxyle, un atome d'halogène, un groupe carboxyle, sulfonamido, nitro, alkylcarbonylamino ou arylcarbonylamino, $SO_3H$, $-SO_2-CH=CH_2$, $-SO_2-CH_2-CH_2-Z$, où

Z représente un groupe $-O-SO_3H$, $-S-SO_3H$, $-OPO_3H_2$, $-OCOCH_3$, un groupe dialkylamino ou un groupe ammonium quaternaire,

$R_4$ représente H ou un groupe alkyle en $C_1$ à $C_4$, éventuellement substitué par un groupe alcoxy en $C_1$ à $C_4$, par $-OSO_3H$, par $-SO_3H$, par $-COOH$ ou par un groupe hydroxyle,

X représente un reste pouvant réagir avec les fibres,

p vaut 0, 1 ou 2,

q vaut 0 ou 1,

l, m, n valent chacun 0 ou 1,

K vaut 1 ou 2,

Me représente un atome de métal divalent, comme Fe, Cu, Zn, Co, Ni, et de préférence Cu.

2. Colorants selon la revendication 1, de formule

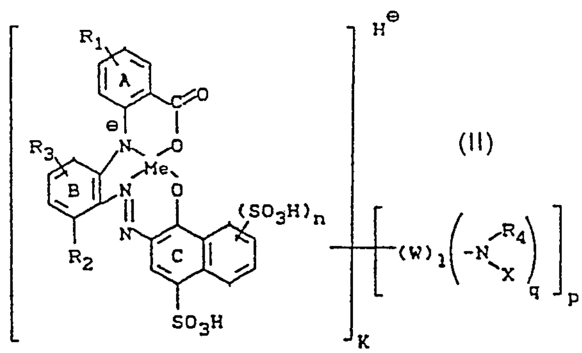

(II)

3. Colorants selon la revendication 1, de formule

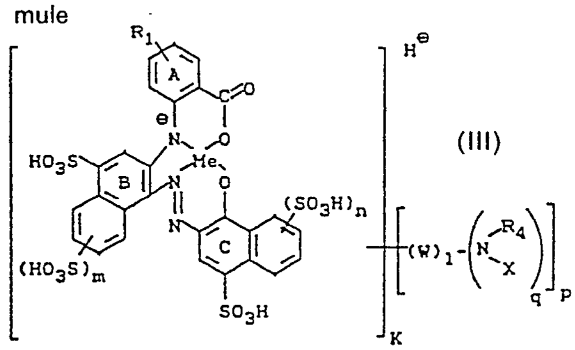

(III)

4. Colorants selon les revendications 1 à 3, dans lesquels K vaut 1 et les indices l, m, n, q et p valent chacun 0.

5. Colorants selon les revendications 1 à 3, dans lesquels K vaut 2, l et p valent 1 et q et m sont nuls.

6. Colorants selon les revendications 1 à 3, dans lesquels k, p et q valent chacun 1, l et m sont chacun nuls.

7. Colorants selon la revendication 1, de formule

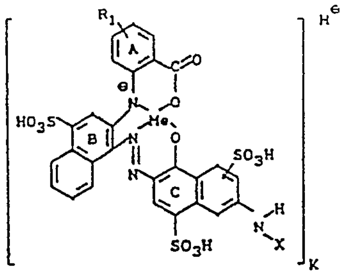

(IV)

8. Utilisation des colorants selon les revendications 1 à 7 pour teindre et imprimer des matières naturelles et synthétiques, en particulier des matières fibreuses en coton, en laine, en polyamide ainsi que du cuir.